# EUROPEAN PATENT SPECIFICATION

(11) **EP 4 537 273 B1**
(45) Date of publication and mention of the grant of the patent: **01.04.2026**
(21) Application number: 23734084.9
(22) Date of filing: 23.05.2023
(51) Int. Cl.: G06Q 10/047, E02F 9/20, E02F 9/26, G05D 1/00

(54) **ROUTE GRAPH CREATION SYSTEM**
ROUTENGRAPHERZEUGUNGSSYSTEM
SYSTÈME DE CRÉATION DE GRAPHE D'ITINÉRAIRE

(30) Priority: 08.06.2022 IN 202211032826
(43) Date of publication of application: 16.04.2025
(73) Proprietor: Caterpillar, Inc., Peoria, IL 61629-6450 (US)
(72) Inventor: RAJENDRAN, Duraivel, Chennai Tamil Nadu 600056 (IN); DAVANAM, Venkata Harshith S, Madanapalle, Andhra Pradesh 517325 (IN)
(74) Representative: Novagraaf Group
(86) International application number: PCT/US2023/023164
(87) International publication number: WO 2023/239550

(56) References cited:
- US-A1- 2021 206 003
- US-A1- 2021 379 757

## Description

### Technical Field

The present disclosure relates to generating routes that machines can use to reach drop points at a worksite and, more particularly, to generating a route graph based on input data that identifies locations of the drop points and locations of structures on the worksite that may be near the drop points.

### Background

Performance of a job on a worksite can involve one or more machines traveling around the worksite to perform tasks, such as deliveries of material to various locations at the worksite. Such machines may be autonomous machines that travel and/or perform tasks automatically. For example, autonomous machines may be assigned to deliver solar panels to drop points at a solar farm that is under construction, so that the solar panels can be installed, or to deliver other types of material to drop points at other types of work sites.

Various systems have been developed to determine routes for autonomous machines. For example, U.S. Patent 11,079,755 to Schlacks et al. (hereinafter "Schlacks") describes a system that allows a user to define, on a map of a worksite, boundaries of an autonomous operating area where a machine is to operate, as well as boundaries of exclusion zones the machine is to avoid. In the system described by Schlacks, a robotics processing unit can use the user-provided boundaries to generate a path for the machine to follow to perform a task within the autonomous operating area, without crossing into the user-defined exclusion zones.

However, Schlacks and other systems generally use computing elements that are onboard the machine or offboard the machine to determine an exact route that the machine is to travel from start to finish. Such systems may use vision systems and/or other computing elements to cause a machine to navigate a particular assigned route in real-time. However, such systems do not determine a set of route segments at a worksite, any of which could be navigated by machines at later times to reach assigned destinations at the worksite.

Hence, there is a need for overcoming one or more of the deficiencies described above.

US2021379757A1 discloses a robotic photovoltaic (PV) module installation system for populating a solar generation plant with PV modules with minimal human intervention. The PV module installation system can include an aerial work platform (AWP), a linear slide, and a robotic arm. The AWP can include an articulated boom. The AWP can also be configured for movement over off-road terrain. The linear slide can be coupled to a free-end of the articulated boom. The robotic arm can be coupled to a slide of the linear slide to increase a horizontal reach of the robotic arm through movement of the slide along the linear slide. The robotic arm can also include an end of arm tooling configured to pick up PV modules.

US2021206003A1 discloses an autonomous solar module installation platform that can be used for solar module installation onto a solar tracker. The autonomous solar module installation platform can include an off-road capable base vehicle and a robotic arm, mounted on the off-road capable base vehicle, for the solar module installation onto the solar tracker. The off-road capable base vehicle and the robotic arm can communicate with each other and cooperate their movements to proceed to the solar tracker and align with the solar tracker in order for the robotic arm to pick up and lift the solar module during an installation of the solar module onto the solar tracker.

### Summary

According to a first aspect, a method includes receiving, by a processor, job design data indicating first coordinates of structures at a worksite, and drop point location data indicating second coordinates of drop points at the worksite. The method also includes identifying, by the processor, based on the job design data and the drop point location data, drop points located between pairs of structures. The method further includes determining, by the processor, midpoints between ends of the pairs of structures. The method additionally includes determining, by the processor, route segments that extend between the pairs of structures through the midpoints to extended endpoints located an extension distance away from the ends of the pairs of structures. The method also includes determining, by the processor, additional route segments that extend between the extended endpoints of the route segments. The method further includes generating, by the processor, a route graph. The route graph includes nodes indicating third coordinates of points on the route segments and the additional route segments, and edges indicating paths, between pairs of the third coordinates, that are traversable by machines at the worksite.

According to a second aspect, a computing system includes a processor and memory storing computer-executable instructions. The computer-executable instructions that, when executed by the processor, cause the processor to receive job design data indicating first coordinates of structures at a worksite, and drop point location data indicating second coordinates of drop points at the worksite. The computer-executable instructions also cause the processor to identify, based on the job design data and the drop point location data, drop points located between pairs of structures, and to determine midpoints between ends of the pairs of structures. The computer-executable instructions additionally cause the processor to determine route segments that extend between the pairs of structures through the midpoints to extended endpoints located an extension distance away from the ends of the pairs of structures. The computer-executable instructions further cause the processor to determine additional route segments that extend between the extended endpoints of the route segments. The computer-executable instructions also cause the processor to generate a route graph that includes nodes indicating third coordinates of points on the route segments and the additional route segments, and edges indicating paths, between pairs of the third coordinates, that are traversable by machines at the worksite.

According to a third aspect, a non-transitory computer-readable media stores computer-executable instructions. The computer-executable instructions, when executed by a processor, cause the processor to receive job design data indicating first coordinates of structures at a worksite, and drop point location data indicating second coordinates of drop points at the worksite. For individual drop points, of the drop points, the computer-executable instructions also cause the processor to determine coordinates of the individual drop points, indicated by the drop point location data. The computer-executable instructions also cause the processor to, for the individual drop points, determine pairs of the structures that are associated with corresponding sets of the first coordinates that are closest to the coordinates of the individual drop points. The computer-executable instructions additionally cause the processor to, for the individual drop points, identify points at ends of the pairs of the structures, based on the first coordinates in the job design data, and to determine midpoints between the points at the ends of the pairs of the structures. The computer-executable instructions further cause the processor to, for the individual drop points, determine route segments that extend between the pairs of the structures, through the midpoints, to extended endpoints located an extension distance away from the ends of the pairs of the structures. The computer-executable instructions also cause the processor to determine additional route segments that extend between the extended endpoints of the route segments. The computer-executable instructions additionally cause the processor to generate a route graph that defines the route segments and the additional route segments. The route graph indicates that the route segments and the additional route segments are paths that are traversable by machines at the worksite.

### Brief Description of the Drawings

The detailed description is described with reference to the accompanying figures. In the figures, the left-most digit of a reference number identifies the figure in which the reference number first appears. The same reference numbers in different figures indicate similar or identical items.
FIG. 1 shows an example of a computing system configured to generate a route graph that defines route segments that can be traversed by machines at a worksite.
FIG. 2 shows an example in which a route graph creator, executing on the computing system, determines that at least one drop point is located between a pair of structures.
FIG. 3 shows an example in which the route graph creator identifies closest corner points, of the pair of structures, to a selected drop point.
FIG. 4 shows an example in which the route graph creator extends the ends of a generated route segment by an extension distance to extended endpoints.
FIG. 5 shows an example in which the route graph creator adjusts the route segment based on determining that a non-drivable area intersects the route segment.
FIG. 6 shows a flowchart illustrating an example process for generating the route graph.
FIG. 7 shows an example system architecture for the computing system.

### Detailed Description

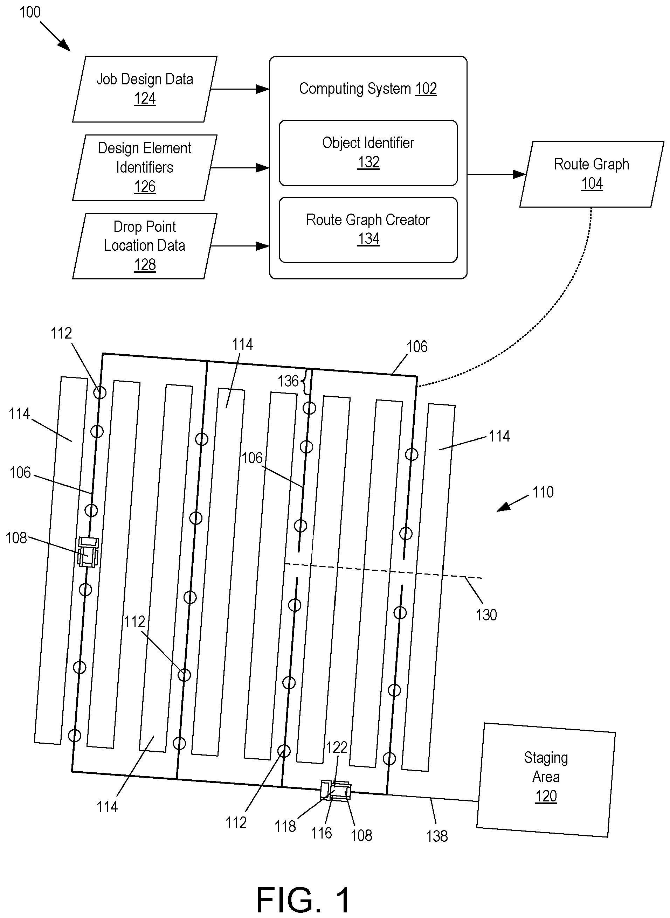

FIG. 1 shows an example 100 of a computing system 102 configured to generate a route graph 104 that defines route segments 106 that can be traversed by machines 108 at a worksite 110. During a job at the worksite 110, a fleet of one or more machines 108 can be configured to deliver material to a set of drop points 112 at the worksite 110. For example, the worksite 110 can be a solar farm that is under construction. The drop points 112 can be locations at the worksite 110 where machines 108, such as autonomous compact track loaders (CTLs), are to deliver solar panels, solar panel installation equipment, and/or other materials. Individual drop points 112 may be located near structures 114 that are present at the worksite 110. For example, the structures 114 may be installation assemblies, such as assemblies that include torque tubes, H-beams, and/or other elements upon which solar panels or other materials can be mounted or otherwise installed. Accordingly, the computing system 102 can generate the route graph 104 to define route segments 106 that machines 108 can traverse to reach the drop points 112 and to deliver material at the drop points 112, without the machines 108 impacting or colliding with structures 114 that may already be present at the worksite 110.

The route graph 104 can be a data structure that includes representations of nodes and edges that are associated with route segments 106. The nodes can correspond with locations associated with route segments 106, such as locations at endpoints of route segments 106, locations at midpoints of route segments 106, locations at intersections or joints between route segments 106, and/or other locations associated with route segments 106. For example, data in the route graph 104 that represents a particular node can indicate Global Positioning System (GPS) coordinates, coordinates relative to positions on the worksite 110 or designated reference markers, or other types of location data, that indicate the location of the node at the worksite 110. An edge can connect a pair of nodes in the route graph 104 to indicate that a traversable route segment extends between that pair of nodes. Accordingly, the edges in the route graph 104 can represent the route segments 106, while the nodes in the route graph 104 can represent endpoints of route segments 106, midpoints of route segments 106, intersections between route segments 106, joints between route segments 106, and/or other points on or along route segments 106.

The worksite 110 can be a construction site, a mine site, a quarry, or any other type of worksite or work environment at which material can be delivered to defined drop points 112. The machines 108 at the worksite 110 can be CTLs, skid steer loaders, track loaders, haul trucks, wheel loaders, or any other type of machine that can transport material from one location to another at the worksite 110. The material can be solar panels, construction materials, dirt, gravel, and/or any other type of material that is to be delivered to the drop points 112 at the worksite 110.

The machines 108 can be vehicles or other mobile machines that have engines, motors, drivetrains, braking systems, hydraulic components, and/or other mechanisms that can cause movement of wheels of the machines, movement of work tools and/or other elements of the machines, and/or otherwise implement operations of the machines. In some examples, one or more of the machines 108 can be fuel-powered machines that operate based on power provided by internal combustion engines and/or other elements that consume fuel. In other examples, one or more of the machines 108 can be battery electric machines (BEMs), battery electric vehicles (BEVs), hybrid vehicles, fuel cell and battery hybrid vehicles, or other mobile machines. For instance, the machines 108 can have batteries, such as lithium-ion (Li-ion) batteries, lithium-ion polymer batteries, nickel-metal hydride (NiMH) batteries, lead-acid batteries, nickel cadmium (Ni-Cd) batteries, zinc-air batteries, sodium-nickel chloride batteries, or other types of batteries that can at least partially power the machines 108.

The machines 108 can be semi-autonomous machines or fully autonomous machines that operate automatically based on the route graph 104 and/or other machine instructions generated by the computing system 102 or another computing system. For example, a machine can have an electronic control module (ECM) 116 and/or other on-board computing devices that can fully or partially control operations of the machine, such as steering, speed adjustments, work tool movements, and/or other operations. Accordingly, operations of a machine can be fully or partially controlled, automatically or semi-automatically, by on-board controllers such as the ECM 116, and/or off-board controllers such as the computing system 102. A machine can, for instance, have an on-board guidance system that can drive the machine autonomously, an obstacle detection system that assists the on-board guidance system or can alert a human operator of nearby objects detected by the obstacle detection system, and/or other systems that fully or partially control operations of the machine.

In some examples, the computing system 102 or another off-board computing device can use the route graph 104 to select route segments 106, defined by the route graph 104, that should be traversed by individual machines 108 to deliver material to particular drop points 112. The computing system 102 or the other off-board computing device can generate machine instructions for ECMs or other on-board computing devices of the machines 108 that cause the machines 108 to autonomously travel along the selected route segments 106 to and from the particular drop points 112. For example, the computing system 102 can generate machine instructions that indicate that a machine is to travel through a series of locations represented by a selected set of nodes of the route graph 104, make turns at locations associated with specified nodes of the route graph 104, and drop material at coordinates associated with a particular drop point.

In other examples, the computing system 102 or another off-board computing device can provide the route graph 104 to the machines 108, and provide other machine instructions that assign individual machines 108 to deliver material to specific designated drop points 112. Accordingly, ECMs or other on-board computing devices of the machines 108 can use the route graph 104 to determine which route segments 106 to autonomously traverse to reach the drop points 112 assigned to the machines 108.

The machines 108 can also include sensors 118, such as cameras, LIDAR sensors, RADAR sensors, other optical sensors or perception systems, GPS sensors, other location and/or positioning sensors, work tool position sensors, hydraulic pressure sensors, payload sensors, speed sensors, brake temperature sensors, other temperature sensors, tire pressure sensors, battery state of health (SoH) sensors, fuel sensors, incline and decline travel sensors, and/or other types of sensors. Such sensors 118 of a machine can be operable coupled to the ECM 116 and/or other on-board computing systems of the machine. The sensors 118 can also provide corresponding sensor data to the ECM 116 and/or other on-board computing systems of the machine, and/or off-board computing systems such as the computing system 102, such that the sensor data can be used to determine a location of the machine, detect nearby terrain, detect nearby objects, such as vehicles, other machines, or personnel, detect the positions of such nearby objects relative to the machine, determine a weight of a payload carried by the machine, determine a state of charge (SoC) of a battery system, determine an amount of fuel carried by the machine, and/or perform other operations. In some examples, data provided by sensors of a machine can enable the ECM 116 of the machine to cause the machine to drive and/or operate autonomously or semi-autonomously, for instance to traverse one or more route segments 106 defined by the route graph 104.

The machines 108 can accordingly operate autonomously or semi-autonomously based on the route graph 104 and/or corresponding machine instructions. For example, machine instructions for a particular machine can indicate that the machine is to load material at a staging area 120 at the worksite 110, which drop points 112 the machine is to deliver the material to, which route segments 106 that the machine is to traverse in a loaded or unloaded state, when the machine is to traverse such route segments 106, which nodes of the route graph 104 represent locations where the machine is to turn a corner or perform another type of operation, and/or other scheduling or routing information. The machine instructions for a machine can also indicate instructions associated with machine operations that the machine is to perform at locations at the worksite 110, such as particular loading or unloading operations, or speeds the machine is to travel while traversing certain route segments 106.

The machines 108 can have wireless communication interfaces 122 that are operably coupled to the ECMs of the machines 108, and that allow the ECMs of the machines 108 to send data to the computing system 102 and/or other off-board controllers, and to receive the route graph 104, machine instructions, and/or other data from the computing system 102 and/or other off-board controllers. Such wireless communication interfaces 122 can include cellular interfaces, modems, receivers, transmitters, antennas, and/or other hardware or software elements configured to send and receive data, for instance to exchange data with the computing system 102 and/or other off-board controllers. The computing system 102 and/or other off-board controllers can have, or be associated with, similar wireless communication interfaces, such that the computing system 102 and/or other off-board controllers can wirelessly exchange data with the ECMs and/or other on-board computing systems of the machines 108.

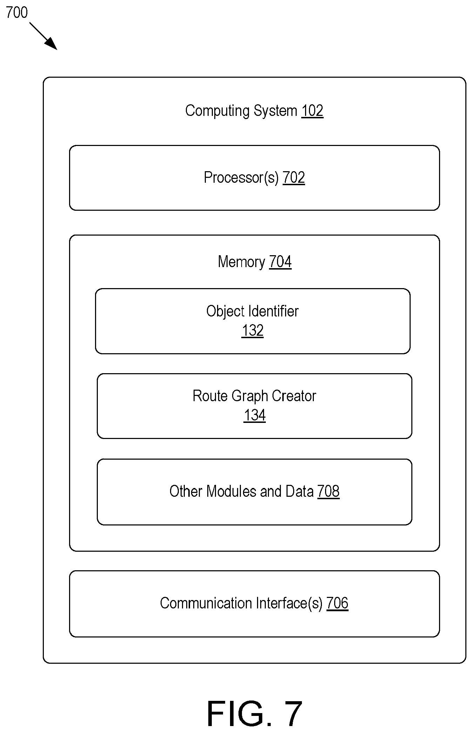

The computing system 102 can be one or more servers, computers, or other off-board computing devices that are separate from the machines 108. For example, while the machines 108 can be located at the worksite 110, the computing system 102 can be located at a back office or other location that is remote from the machines 108 at the worksite 110, or that is remote from the worksite 110 overall. The computing system 102 can be configured to generate the route graph 104, by determining locations on the worksite that are associated with route segments 106 that avoid structures 114 present at the worksite 110, and by generating nodes and edges of the route graph 104 that represent the route segments 106. FIG. 7 discussed further below, describes an example system architecture for the computing system 102.

The structures 114 at the worksite 110 can be substantially straight, and can be oriented along corresponding lines as shown in FIG. 1. For example, a structure can be associated with a polygonal shape, such as an elongated rectangular shape that is oriented along a line. In some examples, two or more structures 114 can be parallel to each other, as shown in FIG. 1.

For example, as discussed above, a structure may be an installation assembly for a solar farm. Such an installation assembly can include a series of support elements, such as H-beams, pedestals, posts, or other elements that extend substantially vertically from a ground surface of the worksite 110. The installation assembly can also include torque tubes or other elements that extend substantially horizontally from and/or between the tops of the H-beams or other support elements, such that the torque tubes or other elements are raised above the ground surface of the worksite 110 and extend substantially along a line associated with the installation assembly. A series of solar panels can accordingly be mounted along the torque tubes or other elements of the installation assembly, such that the solar panels can installed along the installation assembly above the ground surface of the worksite 110.

One or more drop points 112 can be located between a particular pair of structures 114. For example, a drop point for solar panels can be positioned between two installation assemblies, such that solar panels can be delivered by one or more machines 108 to the drop point and can then be installed on and along the two installation assemblies on opposite sides of the drop point. As described herein, the computing system 102 can generate the route graph 104 such that route segments 106 extend between pairs of structures 114, and machines 108 can traverse the route segments 106 to reach drop points 112 located between structures 114.

In some examples, the structures 114 at the worksite 110 can be arranged or grouped into blocks. As a non-limiting example, one block may include a first group of structures 114, while another block may have a second group of structures 114. The structures 114 shown in FIG. 1 may be part of one block of structures 114 at the worksite 110, and one or more other blocks of structures 114 (not shown) may be present at other locations at the worksite 110. The computing system 102 can independently generate distinct route graphs associated with distinct of structures 114 at the worksite 110, or generate a route graph that defines connected route segments 106 that pass through multiple blocks of structures 114 at the worksite 110.

The computing system 102 can receive input associated with the worksite 110, the drop points 112, and/or the structures 114. For example, the computing system 102 can receive job design data 124, design element identifiers 126, and/or drop point location data 128, as shown in FIG. 1.

The job design data 124 can be a construction design file that indicates GPS coordinates and/or other location data associated with structures 114 and/or other design elements at the worksite 110. For example, if the worksite 110 is a solar farm construction site, the job design data 124 can identify GPS coordinates of H-beams, torque tubes, and/or other elements of the structures 114 that are located at the worksite 110.

For a particular structure, the job design data 124 can indicate GPS coordinates or other location data that define boundaries and/or an orientation of the particular structure. As an example, if a particular structure has an elongated rectangular shape as shown in FIG. 1, the job design data 124 can include GPS coordinates that extend along the boundaries of the elongated rectangular shape, and/or that are inside the boundaries of the elongated rectangular shape, such that the GPS coordinates associated with the particular structure indicate the overall shape and/or orientation of the particular structure on the worksite 110.

In some examples, the job design data 124 can be a construction design file that was previously prepared by a designer or other entity to indicate locations of the structures 114 and/or other design elements at the worksite 110. For example, if the worksite 110 is a solar farm construction site, the construction design file may have been created during planning of the layout and/or design of the structures 114, solar panels, or other elements at the solar farm, or after such layout and/or design was finalized. Such a previously-prepared construction design file can be provided to the computing system 102, such that the computing system 102 can use the construction design file to automatically generate route segments 106 that avoid locations of the structures 114 indicated by the construction design file.

The design element identifiers 126 may indicate names, block reference identifiers, and/or other identifiers of particular design elements at the worksite 110. In some examples, although the job design data 124 may indicate GPS coordinates or other location data associated with structures 114 and/or other design elements, the job design data 124 may not directly indicate which of those GPS coordinates or instances of location data are associated with which structures 114 or other design elements, and/or which blocks of structures 114. However, the design element identifiers 126 can be provided as a separate file that indicates unique identifiers for different structures or other design elements. Accordingly, the computing system can use the design element identifiers 126 and the job design data 124 to determine which GPS coordinates or location data instances are associated with corresponding structures 114 that have different identifiers, and/or are associated with different blocks of structures 114. Although in some examples the job design data 124 and the design element identifiers 126 can be provided as separate files, in other examples the job design data 124 and the design element identifiers 126 can be indicated by the same file.

The drop point location data 128 can indicate GPS coordinates or other location data that define locations of the drop points 112 at the worksite 110. The drop point location data 128 can be a spreadsheet, a comma-separated values (CSV) file, or any other data that indicates the locations of the drop points 112. The drop point location data 128 can be provided to the computing system 102 separately from the job design data 124 and/or the design element identifiers 126. For example, although the job design data 124 can indicate GPS coordinates or other location data associated with design elements such as the structures 114, the job design data 124 may lack information about the locations of the drop points 112, and the locations of the drop points 112 can be indicated in separate drop point location data 128.

As a non-limiting example, the job design data 124 can indicate locations of the structures 114, such as solar farm installation assemblies, because those structures 114 will be final components of a solar farm that is under construction. However, the drop points 112 are not intended to be final components of the solar farm, and are instead locations where solar panels can be temporarily placed before the solar panels are installed upon the structures 114. Accordingly, although the job design data 124 may indicate locations of the structures 114 and/or other design elements of the solar farm, the locations of the temporary drop points 112 can be indicated by separate drop point location data 128.

In some examples, input such as the job design data 124, the design element identifiers 126, or other input can identify locations of non-drivable areas at the worksite 110. Non-drivable areas can be trenches, hills, wires, obstacles, or other elements that machines 108 should not drive across. For example, FIG. 1 shows a non-drivable area 130 that extends through a portion of the worksite 110. The non-drivable area 130 can be associated with an electrical wire that extends across a ground surface of the worksite 110, for instance to transmit energy from solar panels that are installed at the worksite 110 and/or to provide energy to motors or other elements configured to adjust orientations of such installed solar panels. To protect the electrical wire, an area around the electrical wire can be designated as the non-drivable area 130. As described herein, the computing system 102 can be configured to generate the route graph 104 to include route segments 106 that do not enter or cross non-drivable areas, such that the route graph 104 does not indicate that there are paths traversable by the machines 108 that enter or cross the non-drivable areas.

The computing system 102 can have an object identifier 132 that is configured to use one or more types of input to identify discrete objects at the worksite 110, such as individual structures 114 and non-drivable areas, and/or determine the locations, shapes, and/or orientations of such discrete objects. If the job design data 124 does not directly indicate which GPS coordinates included in the job design data 124 are associated with which objects, as described above, the object identifier 132 may use the design element identifiers 126 to determine which sets of GPS coordinates indicated in the job design data 124 are associated with which objects.

The computing system 102 can also have a route graph creator 134 that is configured to generate the route graph 104 based on the locations, shapes, and/or orientations of objects at the worksite 110 determined by the object identifier 132, as well as the locations of the drop points 112 indicated by the drop point location data 128. The route graph creator 134 can generate the route graph 104 to include route segments 106 that pass by or through the drop points 112, and that do not pass through objects such as the structures 114 and non-drivable areas.

The route graph creator 134 can generate individual route segments 106 that extend between pairs of structures 114, and that pass by or through one or more drop points 112. The route graph creator 134 can extend the lengths of these route segments 106 beyond the ends of the structures 114 by at least an extension distance 136. The route graph creator 134 can also create additional route segments 106 that connect extended endpoints of the route segments 106 that pass between pairs of structures 114. If any of the generated route segments 106 intersect non-drivable areas, the route graph creator 134 can divide those route segments 106 and leave gaps around the non-drivable areas, such that the remaining route segments 106 avoid crossing the non-drivable areas.

The extension distance 136 can be a predetermined distance, a distance associated with a turn radius of one or more machines 108, a distance associated with widths and/or lengths of the machines 108, a distance away from a neighboring block of structures 114, and/or any other distance. As a first example, the extension distance 136 can be equal to or greater than a turn radius of the machines 108, such that the machines 108 have enough space to travel through a route segment between a pair of structures 114, pass beyond the ends of those structures 114, turn at the endpoint of the route segment that has been extended by the extension distance 136 past the end of the pair of structures, and travel past the ends of one or more structures 114.

As a second example, the job design data 124 and/or design element identifiers 126 may indicate that the eight structures 114 shown in FIG. 1 are a first block of structures 114, but also indicate that another block of structures 114 is present on the worksite 110 that begins ten meters away from the block of structures 114 shown in FIG. 1. There can accordingly be a ten-meter gap between the end of a structure shown in FIG. 1 and the end of another structure in the neighboring block (not shown), which machines 108 may fit through. In this example, the route graph creator 134 can determine that the extension distance 136 can be set to a distance of up to five meters, halfway between the block of structures 114 and the neighboring block of structures 114. Accordingly, in this example, route segments 106 that pass between pairs of structures 114 can be extended up to five meters beyond the ends of those structures 114, and the endpoints of the extended route segments 106 can be connected, such that machines 108 can traverse route segments 106 that pass between larger blocks of structures 114 beyond the ends of the structures 114.

As discussed above, the route graph 104 can be expressed using nodes and edges. The nodes can indicate GPS coordinates or other location data of positions of endpoints of straight route segments 106, such as locations where route segments 106 terminate or join with connecting route segments 106. Edges connecting such nodes in the route graph 104 can indicate that paths between locations represented by the nodes are traversable by machines 108. In some examples, to divide a route segment to avoid crossing a non-drivable area, the route graph creator 134 can define new nodes on the route segment that are at least a threshold distance away from the non-drivable area. Such new nodes can be new endpoints for the divided route segments. The route graph creator 134 can avoid connection the new nodes with an edge, such that the route graph 104 does not indicate that a path between those nodes, which would cross the non-drivable area, is traversable.

The route graph creator 134 may also generate a staging area connection 138 in the route graph 104 that connects the staging area 120 to the route segments 106 of the route graph 104. In some examples, the route graph creator 134 can initially create the route graph 104 without information indicating the location of the staging area 120. However, once the staging area 120 has been defined, for instance after a highway truck delivers boxes of solar panels to a location at the worksite 110 that was not previously determined, user input or other data can be provided to the route graph creator 134 that indicates the location and/or boundaries of the staging area 120. Such user input or other data can also indicate GPS coordinates or other location data associated with a path that extends between the staging area 120 and at least one route segment of the route graph 104. Accordingly, nodes and edges associated with the path can be added to the route graph 104 as the staging area connection 138, such that machines 108 can traverse the staging area connection 138 when traveling to or from the staging area 120.

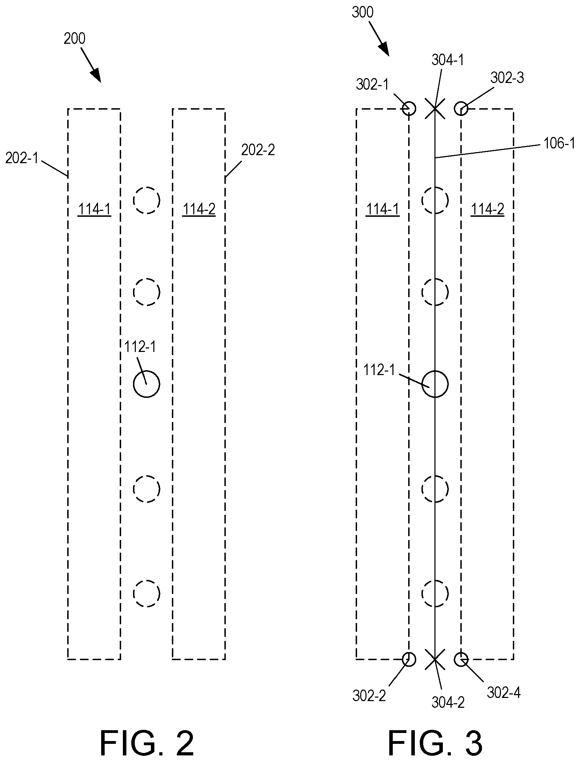

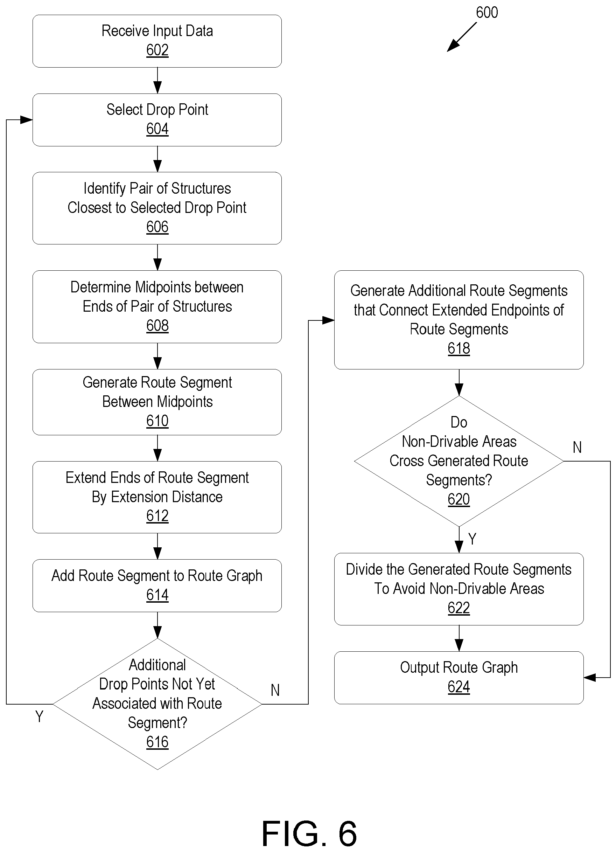

As discussed above, the route graph creator 134 can generate the route graph 104 to include route segments 106 that pass between pairs of structures 114, such that machines 108 can travel to drop points 112 between the pairs of structures 114. The route graph 104 can define the locations of the route segments 106, and intersections between route segments 106, that are traversable by the machines 108 at the worksite 110. The route graph 104 itself may not indicate the locations of the drop points 112, in some examples. However, as described above, if a machine is assigned to travel to a particular drop point, the route graph 104 can indicate coordinates or other location data of route segments 106 that the machine can traverse during travel to and/or from the assigned drop point. FIGS. 2-5, discussed further below, show examples of steps the route graph creator 134 can take to generate one or more route segments 106 associated with a particular pair of structures 114 that includes structure 114-1 and structure 114-2. FIG. 6, discussed further below, shows an example process for generating the route graph 104 using the computing system 102.

FIG. 2 shows an example 200 in which the route graph creator 134 determines that at least one drop point, drop point 112-1, is located between the pair of structures 114 that includes structure 114-1 and structure 114-2. In some examples, the route graph creator 134 may be configured to select a particular drop point, such as drop point 112-1, out of a set of drop points indicted by the drop point location data 128, and then use the job design data 124 and/or the design element identifiers 126 to identify the nearest two structures 114 to the selected drop point. Accordingly, in these examples, the route graph creator 134 can identify the pair of structures 114, including structure 114-1 and structure 114-2, that are closest to the selected drop point.

In other examples, the route graph creator 134 may be configured to select a pair of structures 114, such as structure 114-1 and structure 114-2. In these examples, the route graph creator 134 can determine the boundaries of a polygon that extends along the edges of the pair of structures 114. The route graph creator 134 can then determine whether the drop point location data 128 indicates that at least one drop point is located within the boundaries of the polygon. Accordingly, if the drop point location data 128 indicates that at least one drop point is located within the polygon, the route graph creator 134 can determined that at least one drop point, such as drop point 112-1, is located between the pair of structures 114.

As discussed above, the job design data 124 can indicate GPS coordinates, or other location data, that define boundaries 202 indicating the location, shape, and/or orientation of the structures 114. Accordingly, the object identifier 132 and/or the route graph creator 134 can determine location data that represents the boundaries 202 of the pair of structures 114, such as GPS coordinates that define boundaries 202-1 of structure 114-1 and that define boundaries 202-2 of structure 114-2. The object identifier 132 and/or the route graph creator 134 can also determine coordinates, or other location data, associated with corner points of the boundaries 202 of the structures 114. For example, the object identifier 132 and/or the route graph creator 134 can determine GPS coordinates of the four corners of structure 114-1, as well as GPS coordinates of the four corners of structure 114-2.

FIG. 3 shows an example 300 in which the route graph creator 134 identifies the closest corner points 302, of the pair of structures 114, to the selected drop point 112-1. As discussed above with respect to FIG. 2, the object identifier 132 and/or the route graph creator 134 can determine GPS coordinates of the four corners of structure 114-1, as well as GPS coordinates of the four corners of structure 114-2. the route graph creator 134 can accordingly determine which four of those corner points are closest to the GPS coordinates of drop point 112-1. For example, the route graph creator 134 can determine that of the four corners of structure 114-1, corner points 302-1 and 302-2 are closest to the coordinates of drop point 112-1. Corner points 302-1 and 302-2 can accordingly represent ends of a line that extends along an edge of structure 114-1 that is closest to drop point 112-1. Similarly, the route graph creator 134 can determine that of the four corners of structure 114-2, corner points 302-3 and 302-4 are closest to the coordinates of drop point 112-1. Corner points 302-3 and 302-4 can accordingly represent ends of a line that extends along an edge of structure 114-2 that is closest to drop point 112-1.

As shown in FIG. 3, the route graph creator 134 can determine locations of midpoints 304, such as midpoints 304-1 and 304-2, that are substantially halfway between pairs of corner points 302 associated with the different structures 114. For example, the route graph creator 134 can determine a location of midpoint 304-1 that is halfway between corner point 302-1 of structure 114-1 and corner point 302-3 of structure 114-2. The route graph creator 134 can similarly determine a location of midpoint 304-2 that is substantially halfway between corner point 302-2 of structure 114-1 and corner point 302-4 of structure 114-2. In other examples, the route graph creator 134 can determine the locations of the midpoints 304 based on distances that are substantially halfway between the corners of the structures 114-1 and 114-2 that are the farthest away from the coordinates of drop point 112-1, or based on distances that are substantially halfway between other points along the ends of the structures 114-1 and 114-2.

The route graph creator 134 can also generate a route segment, such as route segment 106-1, that extends between the identified midpoints 304, such as midpoint 304-1 and 304-2. The generated route segment 106-1 can accordingly extend between midpoint 304-1 and 304-2, and also extend between structure 114-1 and structure 114-2. The generated route segment 106-1 can also be oriented substantially parallel to the orientations of structure 114-1 and structure 114-2. Additionally, the generated route segment 106-1 can extend through, or near, drop point 112-1 and any other drop points 112 (if any) that are positioned between structure 114-1 and structure 114-2.

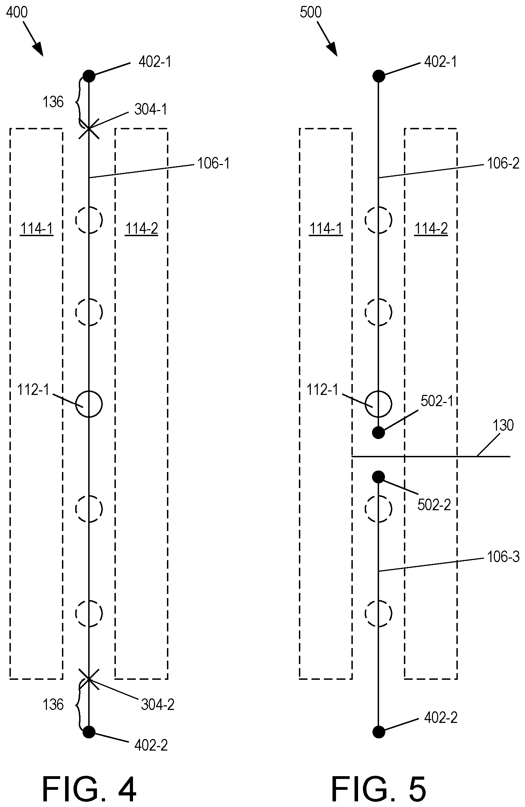

FIG. 4 shows an example 400 in which the route graph creator 134 extends the ends of the generated route segment 106-1 by the extension distance 136 to extended endpoints 402. As discussed above, the extension distance 136 can be a predetermined distance, a distance determined based on a turning radius or dimensions of one or more machines, a distance based on how far away the ends of the pair of structures 114 are from an adjacent block of structures or other obstacle, or any other distance.

To extend an end of the route segment 106-1 by the extension distance 136 to an extended endpoint, the route graph creator 134 can determine a bearing angle that indicates the direction or orientation of the route segment 106-1. The route graph creator 134 can accordingly use the reverse of the bearing angle to extend the end of the route segment 106-1 by the extension distance 136. As an example, the route graph creator 134 may determine that, beginning at midpoint 304-1 and moving toward midpoint 304-2, route segment 106-1 extends from north to south along a direction of 180 degrees. Accordingly, the route graph creator 134 can extend the route segment 106-1, by the extension distance 136, from midpoint 304-1 along a direction of 0 degrees to extended endpoint 402-1. Similarly, the route graph creator 134 may determine that, beginning at midpoint 304-2 and moving toward midpoint 304-1, route segment 106-1 extends from south to north along a direction of 0 degrees. The route graph creator 134 can accordingly extend the route segment 106-1, by the extension distance 136, from midpoint 304-2 along a direction of 180 degrees to extended endpoint 402-2.

After having extended the ends of the route segment 106-1 by the extension distance 136 as shown in FIG. 4, the route graph creator 134 can generate additional route segments 106 that connect the ends of the route segment 106-1, such as extended endpoint 402-1 and extended endpoint 402-2, to other route segments 106. For example, as shown in FIG. 1, the route graph creator 134 can connect extended endpoints of a route segment that passes between a pair of structures 114 to extended endpoints of other adjacent route segments that pass between other pairs of structures 114.

FIG. 5 shows an example 500 in which the route graph creator 134 adjusts the route segment 106-1 based on determining that non-drivable area 130 intersects route segment 106-1. For example, after having generated route segment 106-1 as discussed above with respect to FIGS. 2-4, the route graph creator 134 can determine whether any non-drivable areas, such as non-drivable area 130, intersect the generated route segment 106-1. Locations of non-drivable areas can be indicated by the job design data 124, the design element identifiers 126, and/or other input data provided to the computing system 102.

As shown in FIG. 5, if the route graph creator 134 determines that non-drivable area 130 intersects route segment 106-1, the route graph creator 134 can divide route segment 106-1 into route segment 106-2 and route segment 106-3, such that route segment 106-2 and route segment 106-3 do not cross non-drivable area 130. For example, the route graph creator 134 can define endpoints 502, such as endpoint 502-1 and endpoint 502-2, along route segment 106-1 that are spaced away from non-drivable area 130 by at least a threshold distance. The route graph creator 134 can accordingly generate route segment 106-2 to extend between extended endpoint 402-1 and new endpoint 502-1, and generate route segment 106-3 to extend between extended endpoint 402-2 and new endpoint 502-2.

Although in some examples the route graph creator 134 can generate route segment 106-1, extend route segment 106-1, and then divide route segment 106-1 into route segment 106-2 and route segment 106-3 if the route graph creator 134 determines that non-drivable area 130 intersects route segment 106-1 as discussed above, in other examples the route graph creator 134 can determine whether a route segment intersects a non-drivable area earlier in the process. For example, after determining midpoints 304-1 and 304-2 as shown in FIG. 3, the route graph creator 134 determine whether a line between midpoints 304-1 and 304-2 would cross the non-drivable area 130. If so, the route graph creator 134 may generate two route segments on opposite sides of the non-drivable area 130 that are aligned along the line between midpoints 304-1 and 304-2, and then extend ends of those lines that are away from the non-drivable area 130 by the extension distance 136.

For some pairs of structures 114 that have at least one drop point between the structures 114, the route graph creator 134 may follow the steps shown in FIGS. 2-4 to generate a route segment, and can add the generated route segment to the route graph 104 if the generated route segment does not cross a non-drivable area. However, if the generated route segment does cross a non-drivable area, the route graph creator 134 can additionally follow example 500 shown in FIG. 5 to divide the generated route segment, and then add the divided route segments to the route graph 104.

As discussed above, route segments 106 can be represented by nodes and edges in the route graph 104. Accordingly, in the examples shown in FIGS. 2-4, the route graph creator 134 may represent route segment 106-1 by generating nodes that indicate the locations of extended endpoint 402-1 and extended endpoint 402-2. The route graph creator 134 may also, in some examples, generate one or more nodes representing locations between extended endpoint 402-1 and extended endpoint 402-2, such as a node that indicates a location halfway between extended endpoint 402-1 and extended endpoint 402-2. The route graph creator 134 can generate one or more edges in the route graph 104 that connect the nodes associated with route segment 106-1.

If the route graph creator 134 determined that a non-drivable area intersects a route segment, for example as discussed with respect to FIG. 5, the route graph creator 134 can divide the route segment by generating additional nodes along the original route segment, and omitting edges that connect the additional nodes. For example, to represent route segment 106-2 shown in FIG. 5, the route graph creator 134 can generate nodes that indicate the locations of extended endpoint 402-1 and endpoint 502-1, and can generate an edge that connects those nodes in the route graph 104. Similarly, to represent route segment 106-3 shown in FIG. 5, the route graph creator 134 can generate nodes that indicate the locations of extended endpoint 402-2 and endpoint 502-2, and can generate an edge that connects those nodes in the route graph 104. The route graph creator 134 can avoid generating an edge that connects the nodes representing endpoint 502-1 and endpoint 502-2. Accordingly, the lack of an edge between the nodes representing endpoint 502-1 and endpoint 502-2 in the route graph 104 can indicate that machines 108 are not permitted to drive directly between endpoint 502-1 and endpoint 502-2, and the machines 108 can thus avoid the non-drivable area 130.

FIG. 6 shows a flowchart 600 illustrating an example process for generating the route graph 104. The operations shown in FIG. 6 can be performed by the computing system 102. FIG. 7, discussed further below, describes an example system architecture for the computing system 102.

At block 602, the computing system 102 can receive input data from one or more data sources. The input data can include the job design data 124, such as a construction design file, that indicates coordinates associated with structures 114. The input data can also include the design element identifiers 126 that indicates names or other identifiers of the structures 114. The input data can further include the drop point location data 128, such as a spreadsheet or other type of data, that indicates coordinates of drop points 112. The input data can also indicate coordinates of non-drivable areas, if any, for instance in the job design data 124 or in a separate input file.

At block 604, the computing system 102 can select one of the drop points 112, from among the set of drop points 112 indicated by the drop point location data 128. In some examples, the computing system 102 can select the drop point associated with the first coordinates listed in the drop point location data 128 during a first pass through block 604, and sequentially select other drop points indicated by the drop point location data 128 during subsequent passes through block 606. In other examples, the computing system 102 can select the drop point at random during a pass through block 604, from among a set of drop points that have not yet been selected during previous passes though block 604. In still other examples, the computing system 102 can use any other selection method to select the drop point at block 604.

At block 606, the computing system 102 can identify a pair of structures that are closest to the drop point selected at block 604. For example, the computing system 102 can determine the coordinates of the selected drop point, based on the drop point location data 128. The computing system 102 can also determine discrete sets of coordinates that are associated with corresponding discrete structures 114, based on the job design data 124 and/or the design element identifiers 126. The computing system 102 can determine distances between the coordinates of the selected drop point and coordinates associated with the different structures 114, and compare the distances to identify the two structures 114 that are associated with coordinates that are closest to the coordinates of the selected drop point. The two structures 114 associated with coordinates that are closest to the coordinates of the selected drop point can be located on opposing sides of the selected drop point. Accordingly, at block 606, the computing system 102 can identify the two structures 114, associated with coordinates that are closest to the coordinates of the selected drop point, as the pair of structures 114 that the selected drop point is located between.

At block 608, the computing system 102 can identify coordinates of midpoints 304 between ends of the pair of structures 114. As described above with respect to FIG. 3, in some examples the computing system 102 may identify corner points of each of the structures 114, identify which of those corner points are closest to the coordinates of the selected drop point, and determine coordinates of midpoints 304 that are substantially halfway between the coordinates of the closest corner points of the structures 114. However, in other examples the computing system may identify the farthest corner points on the structures 114 from the coordinates of the selected drop point, or identify any other points along the ends of the structures 114, and determine coordinates of midpoints 304 that are substantially halfway between those points.

At block 610, the computing system 102 can generate a route segment that extends between the coordinates of the midpoints 304 identified at block 608. The generated route segment can extend between the pair of structures 114, for example as shown in FIG. 3.

At block 612, the computing system 102 can extend the ends of the route segment by the extension distance 136. For example, at each end of the route segment, the computing system 102 can determine the bearing angle of the line the route segment is aligned along. The computing system 102 can thus use a reverse of the bearing angle to extend the end of the route segment, by the extension distance 136, to an extended endpoint as shown in FIG. 4.

At block 614, the computing system 102 can add the route segment to the route graph 104. For example, the computing system 102 can generate nodes of the route graph 104 that indicate coordinates of the extended endpoints of the route segment, and/or other points along the route segment, and generate edges of the route graph 104 that connect those nodes.

At block 616, the computing system 102 can determine whether the drop point location data 128 includes coordinates associated with any other drop points that are not yet associated with the route segment, or other generated route segments, indicated in the route graph 104. For example, if the drop point location data 128 indicates that there are one or more additional drop points that are also located at coordinates that are between the pair of structures 114 identified during the last pass through block 606, the computing system 102 can determine that those additional drop points are associated with the same route segment added to the route graph 104 during the last pass through block 614. Similarly, the computing system 102 can determine whether, for a particular drop point with coordinates indicated in the drop point location data 128, another route segment previously added to the route graph already passes through those coordinates. However, if the computing system 102 identifies a drop point at block 616 that has coordinates that are not along any of the route segments already defined by the route graph 104 (Block 616 - Yes), the computing system 102 can return to block 604 to select that drop point and generate a corresponding route segment using blocks 606 through 614. If the computing system 102 determines that there are no additional drop points that are not already associated with route segments already defined by the route graph 104 (Block 616 - No), the computing system 102 can move to block 618.

At block 618, the computing system 102 can generate additional route segments 106, in the route graph 104, that connect the extended endpoints of the route segments 106 already defined in the route graph 104. For example, the route segments 106 generated during passes through blocks 604 through 614 can extend between different pairs of structures 114, and can have extended endpoints 402 at locations that are the extension distance 136 beyond the ends of the structures 114. Accordingly, at block 618 the computing system 102 can generate additional route segments 106 that connect the extended endpoints 402 of different route segments 106. For example, if the extended endpoints 402 are represented by nodes in the route graph 104, the computing system 102 can add edges in the route graph 104 that connect pairs of those nodes. Because the extended endpoints 402 extend beyond the ends of the structures 114 by the extension distance 136, the route segments 106 added at block 618 can be positioned away from the ends of the structures 114.

At block 620, the computing system 102 can determine whether non-drivable areas cross any of the route segments 106 defined in the route graph 104. In some examples, if one or more of the route segments 106 do cross non-drivable areas (Block 620 - Yes), the computing system 102 can divide those route segments 106 at block 622 to create gaps in the route graph 104 around the non-drivable areas, as discussed above with respect to FIG. 5. For example, the computing system 102 can add additional nodes to the route graph 104 along a route segment that intersects a non-drivable area, with the nodes being positioned at least a threshold distance away from the non-drivable area. Those nodes can become new endpoints 502 that the computing system 102 can connect with edges to the previously-determined extended endpoints 402 in the route graph 104. The computing system 102 can also avoid connecting the new endpoints 502 with edges in the route graph 104, such that the route graph 104 does not indicate that a path directly between the new endpoints 502 is traversable by machines 108.

After dividing any route segments 106 that intersected non-drivable areas at block 622, or if none of the route segments 106 crossed non-drivable areas (Block 620 - No), the computing system 102 can output the route graph 104 at block 624. The computing system 102 can output the route graph 104 to one or more machines 108 at the worksite, for instance via wireless transmissions. In other examples, the computing system 102 can output the route graph 104 to another computing system that provides the route graph 104 to the machines 108 and/or uses the route graph 104 to generate machine instructions for the machines 108. In some examples, the route graph 104 may be adjusted to add nodes and edges representing coordinates of the staging area connection 138, for instance once input indicating the location of the staging area 120 and/or the path for the staging area connection 138 is provided to the computing system 102, before the route graph 104 is output at block 624.

In some examples, the computing system 102 may repeat the process shown in FIG. 6 for multiple groups of structures 114 and/or drop points 112. For example, the worksite 110 may be designed to have blocks that each include a different group of structures 114. For instance, the group of structures 114 shown in FIG. 1 can be a first block of structures 114 at a solar farm construction site, by there may be additional blocks of structures 114 (not shown) at other locations at the solar farm construction site that have the same or different numbers of structures 114, structures of different sizes and/or orientations, different arrangements of structures 114, and/or that otherwise differ from the first block of structures.

Accordingly, the computing system 102 may use the process shown in FIG. 6 to generate a route graph associated with a first block of structures 114, such that the route graph includes route segments that pass between different pairs of structures 114 in the first block. The computing system 102 can repeat the process shown in FIG. 6 to generate route segments 106 that pass between pairs of structures 114 within additional blocks located at the worksite 110. In some examples, the computing system 102 may generate distinct route graphs for each block of structures 114 at the worksite 110. In other examples, when the computing system 102 generates route segments 106 associated with a particular block of structures 114 at the worksite 110, the computing system 102 can add nodes and edges representing those route segments 106 to a route graph that is associated with larger group of blocks, or with the worksite 110 overall.

FIG. 7 shows an example system architecture 700 for the computing system 102. The computing system 102 can include one or more servers or other computing devices that include one or more processors 702, memory 704, and communication interfaces 706.

The processor(s) 702 can operate to perform a variety of functions as set forth herein. The processor(s) 702 can include one or more chips, microprocessors, application specific integrated circuits (ASICs), field programmable gate arrays (FPGAs) and/or other programmable circuits, central processing units (CPUs), graphics processing units (GPUs), digital signal processors (DSPs), and/or other processing units or components known in the art. In some examples, the processor(s) 702 can have one or more arithmetic logic units (ALUs) that perform arithmetic and logical operations, and/or one or more control units (CUs) that extract instructions and stored content from processor cache memory, and executes such instructions by calling on the ALUs during program execution. The processor(s) 702 can also access content and computer-executable instructions stored in the memory 704, and execute such computer-executable instructions.

The memory 704 can be volatile and/or non-volatile computer-readable media including integrated or removable memory devices including random-access memory (RAM), read-only memory (ROM), flash memory, a hard drive or other disk drives, a memory card, optical storage, magnetic storage, and/or any other computer-readable media. The computer-readable media can be non-transitory computer-readable media. The computer-readable media can be configured to store computer-executable instructions that can be executed by the processor(s) 702 to perform the operations described herein.

For example, the memory 704 can include a drive unit and/or other elements that include machine-readable media. A machine-readable medium can store one or more sets of instructions, such as software or firmware, that embodies any one or more of the methodologies or functions described herein. The instructions can also reside, completely or at least partially, within the processor(s) 702 and/or communication interface(s) 706 during execution thereof by the computing system 102. For example, the processor(s) 702 can possess local memory, which also can store program modules, program data, and/or one or more operating systems.

The memory 704 can store data and/or computer-executable instructions associated with the object identifier 132, the route graph creator 134, and/or other elements described herein. The memory 704 can also store other modules and data 708 that can be utilized by the computing system 102 to perform or enable performing any action taken by the computing system 102. For example, the other modules and data 708 can include a platform, operating system, and/or applications, as well as data utilized by the platform, operating system, and/or applications.

The communication interfaces 706 can include transceivers, modems, interfaces, antennas, and/or other components that can transmit and/or receive data over networks or other data connections. For example, the computing system 102 can use the communication interfaces 706 to receive the job design data 124, the design element identifiers 126, the drop point location data 128, and/or other types of input from one or more data sources, and to output the route graph 104 to one or more destinations. For instance, the communication interfaces 706 can, in some examples, include wireless communication interfaces that the computing system 102 can use to transmit the route graph 104 to wireless communication interfaces 122 of one or more machines 108.

### Industrial Applicability

As described above, the computing system 102 can generate the route graph 104 to define route segments 106 that are traversable by one or more machines 108 at the worksite 110, such that the machines 108 can use the route graph 104 to travel to drop points 112 located between pairs of structures 114 and deliver material to the drop points 112. The computing system 102 can generate the route graph 104 based at least in part on the job design data 124 indicating coordinates of the structures 114, as well as separate drop point location data indicating coordinates of the drop points 112. For example, if at least one drop point is located between a particular pair of structures 114, the computing system 102 can generate a route segment that extends along a line positioned between the pair of structures 114. The computing system 102 can generate the route segment to extend beyond the ends of the pair of structures 114, for instance by the extension distance 136. The computing system 102 can also connect the extended ends of the route segments passing between different pairs of structures 114. If any of the route segments 106 intersect non-drivable areas, the computing system 102 can adjust those route segments 106 to include a gap around the non-drivable areas, such that the route graph 104 indicates that the gap is not traversable by the machines 108.

The job design data 124 that indicates the coordinates of the structures 114 may be a design file that was prepared by a designer or other entity during planning of a construction project or other job, for instance to indicate the dimensions and placements of the structures 114 at the worksite 110. The computing system 102 can re-use the design file to determine the coordinates of the structures 114 at the worksite 100, and to automatically generate route segments 106 that avoid the coordinates of the structures 114 but allow the machines 108 to travel to coordinates of drop points indicated by the separate drop point location data 128.

The systems and methods described herein can generate the route graph 104 more quickly and/or more efficiently than other systems. For example, while a human could use a satellite photograph showing installed structures 114 at the worksite 110 to draw route segments that reach one hundred drop points and that pass between pairs of structures 114 shown in the photograph, such a process of manually drawing each individual route segment can take approximately 30 minutes per block of structures 114. The overall worksite 110 may have hundreds of blocks of structures 114, that together encompass thousands of pairs of structures 114 and are associated with thousands of drop points, such that it may take approximately 50 hours to manually draw route segments for the entire worksite 110. However, the computing system 102 described herein can automatically generate a route graph for each block of structures in less than a minute, such that the computing system 102 can automatically generate route graphs for hundreds of blocks at the worksite 110 in a few hours or less. Accordingly, the computing system 102 can automatically generate route graphs for all of the blocks at the worksite 110 in a significantly shorter period of time than the route graphs could be created manually. Moreover, because the computing system 102 can automatically generate the route graphs in a relatively short period of time, the computing system 102 can use fewer computing resources, such as processor cycles, memory, and bandwidth, relative to computing resources that may be used by another computing system operated by a human during manual creation of route graphs over 50 hours.

Additionally, because the computing system 102 uses actual coordinates of structures 114 indicated by the job design data 124 to determine the positions, orientations, and lengths of route segments 106, the positioning of the route segments 106 defined by the route graph 104 automatically generated by the computing system 102 can be more accurate and/or more consistent than route segments 106 that might be generated by humans manually. For example, if a human were to manually draw a representation of a route segment between two structures 114 based on a satellite photograph of the structures 114, human error may cause the drawn route segment to be closer one of the structures than the other, and thus increase the chances of a machine colliding with the closer structure. However, route segments 106 automatically generated by the computing system 102 can be positioned based on midpoints that are halfway between coordinates of the structures indicated by the job design data 124, such that machines 108 can autonomously travel between the structures 114 with less risk of collisions.

While aspects of the present disclosure have been particularly shown and described with reference to the embodiments above, it will be understood by those skilled in the art that various additional embodiments may be contemplated by the modification of the disclosed machines, systems, and method without departing from the scope of what is disclosed. Such embodiments should be understood to fall within the scope of the present disclosure as determined based upon the claims and any equivalents thereof.

## Claims

1. A method comprising:
receiving, by a processor (702):
job design data (124) indicating first coordinates of structures (114) at a worksite (110); and
drop point location data (128) indicating second coordinates of drop points (112) at the worksite (110);
identifying, by the processor (702), based on the job design data (124) and the drop point location data (128), drop points (112) located between pairs of structures (114);
**characterised by**:
determining, by the processor (702), midpoints (304) between ends of the pairs of structures (114);
determining, by the processor (702), route segments (106) that extend between the pairs of structures (114) through the midpoints (304) to extended endpoints (402) located an extension distance (136) away from the ends of the pairs of structures (114);
determining, by the processor (702), additional route segments (106) that extend between the extended endpoints (402) of the route segments (106); and
generating, by the processor (702), a route graph (104) comprising:
nodes indicating third coordinates of points on the route segments (106) and the additional route segments (106), and
edges indicating paths, between pairs of the third coordinates, that are traversable by machines (108) at the worksite (110).

2. The method of claim 1, wherein the worksite is a solar farm construction site, the structures (114) are solar panel installation assemblies, and the drop points (112) are locations where the machines (108) are to deliver solar panels that are to be installed on the installation assemblies.

3. The method of claim 1, wherein the machines (108) are autonomous machines configured to travel along selected route segments (106) based on corresponding nodes and corresponding edges in the route graph (104).

4. The method of claim 1, wherein identifying the drop points (112) located between the pairs of structures (114) comprises:
selecting, by the processor (702), a drop point (112) based on the drop point location data (128);
determining, by the processor (702), coordinates of the drop point (112) indicated by the drop point location data (128); and
determining, by the processor (702), a pair of the structures (114) that are associated with sets of the first coordinates that are closest to the coordinates of the drop point (112).

5. The method of claim 4, wherein the pair of structures (114) includes a first structure (114-1) and a second structure (114-2), and determining the midpoints (304) and the route segments (106) comprises:
identifying, by the processor (702), first corner points (302) of the first structure (114-1) that are closest to the coordinates of the drop point (112), based on the first coordinates in the job design data (124) associated with the first structure (114-1);
identifying, by the processor (702), second corner points (302) of the second structure (114-2) that are closest to the coordinates of the drop point (112), based on the first coordinates in the job design data (124) associated with the second structure (114-2);
determining, by the processor (702), first midpoints (304) between the first corner points (302) and the second corner points (302) at opposing ends of the first structure (114-1) and the second structure (114-2);
generating, by the processor (702), a route segment (106) that extends between the first midpoints (304) and between the first structure (114-1) and the second structure (114-2); and
extending, by the processor (702), the route segment (106) by the extension distance (136) at opposing ends of the route segment (106).

6. The method of claim 5, wherein extending the route segment (106) comprises determining a bearing angle of the route segment (106), and extending the route segment (106) along a line oriented based on the bearing angle.

7. The method of claim 1, further comprising:
determining, by the processor (702), and based on the job design data (124) or other input data, fourth coordinates of a non-drivable area (130) at the worksite (110);
identifying, by the processor (702), a route segment (106), of the route segments (106), that intersects the non-drivable area (130);
dividing, by the processor (702), the route segment (106) into two route segments (106) spaced apart from the fourth coordinates of the non-drivable area (130) by at least a threshold distance; and
adjusting, by the processor (702), the route graph (104) based on dividing the route segment (106) into the two route segments (106).

8. The method of claim 1, wherein the job design data (124) is a construction design file that is separate from the drop point location data (128).

9. A non-transitory computer-readable media storing computer-executable instructions that, when executed by a processor (702), cause the processor (702) to:
receive job design data (124) indicating first coordinates of structures (114) at a worksite (110), and drop point location data (128) indicating second coordinates of drop points (112) at the worksite (110);
for individual drop points (112), of the drop points (112):
determine coordinates of the individual drop points (112), indicated by the drop point location data (128);
determine pairs of the structures (114) that are associated with corresponding sets of the first coordinates that are closest to the coordinates of the individual drop points (112);
identify points at ends of the pairs of the structures (114), based on the first coordinates in the job design data (124);
the media being **characterised in that** it stores computer-executable instructions that, when executed by the processor (702), cause the processor (702) to:
determine midpoints (304) between the points at the ends of the pairs of the structures (114); and
determine route segments (106) that extend between the pairs of the structures (114), through the midpoints (304), to extended endpoints (402) located an extension distance (128) away from the ends of the pairs of the structures (114);
determine additional route segments (106) that extend between the extended endpoints (402) of the route segments (106); and
generate a route graph (104) that defines the route segments (106) and the additional route segments (106), wherein the route graph (104) indicates that the route segments (106) and the additional route segments (106) are paths that are traversable by machines (108) at the worksite (110).

10. The non-transitory computer-readable media of claim 9, wherein the computer-executable instructions further cause the processor (702) to:
determine, based on the job design data (124) or other input data, coordinates of a non-drivable area (130) at the worksite (110);
identify a route segment (106), of the route segments (106), that intersects the non-drivable area (130);
divide the route segment (106) into two route segments (106) spaced apart from the coordinates of the non-drivable area (130) by at least a threshold distance; and
adjust the route graph (104) based on dividing the route segment (106) into the two route segments (106).

## Patentansprüche

1. Verfahren, umfassend:
Empfangen, durch einen Prozessor (702), von:
Aufgabenplanungsdaten (124), die erste Koordinaten von Strukturen (114) an einer Arbeitsstätte (110) angeben; und
Absetzpunktortsdaten (128), die zweite Koordinaten von Absetzpunkten (112) an der Arbeitsstätte (110) angeben;
Identifizieren, durch den Prozessor (702), basierend auf den Aufgabenplanungsdaten (124) und den Absetzpunktortsdaten (128), von Absetzpunkten (112), die zwischen Paaren von Strukturen (114) angeordnet sind; **gekennzeichnet durch:**
Bestimmen, durch den Prozessor (702), von Mittelpunkten (304) zwischen Enden der Paare von Strukturen (114);
Bestimmen, durch den Prozessor (702), von Routensegmenten (106), die sich zwischen den Paaren von Strukturen (114) durch die Mittelpunkte (304) zu erstreckten Endpunkten (402) erstrecken, die in eine Erstreckungsdistanz (136) von den Enden der Paare von Strukturen (114) entfernt angeordnet sind;
Bestimmen, durch den Prozessor (702), von zusätzlichen Routensegmenten (106), die sich zwischen den erstreckten Endpunkten (402) der Routensegmente (106) erstrecken; und
Erzeugen, durch den Prozessor (702), eines Routengraphen (104), umfassend:
Knoten, die dritte Koordinaten von Punkten auf den Routensegmenten (106) und den zusätzlichen Routensegmenten (106) angeben, und
Ränder, die Pfade zwischen Paaren der dritten Koordinaten angeben, die von Maschinen (108) an der Arbeitsstätte (110) passierbar sind.

2. Verfahren nach Anspruch 1, wobei die Arbeitsstätte eine Solarpark-Baustelle ist, die Strukturen (114) Solarmodul-Installationsbaugruppen sind und die Absetzpunkte (112) Orte sind, an denen die Maschinen (108) Solarmodule liefern sollen, die in den Installationsbaugruppen installiert werden sollen.

3. Verfahren nach Anspruch 1, wobei die Maschinen (108) autonome Maschinen sind, die konfiguriert sind, um entlang ausgewählter Routensegmente (106) basierend auf entsprechenden Knoten und entsprechenden Rändern in dem Routengraphen (104) zu fahren.

4. Verfahren nach Anspruch 1, wobei das Identifizieren der Absetzpunkte (112), die zwischen den Paaren von Strukturen (114) angeordnet sind, umfasst:
Auswählen, durch den Prozessor (702), eines Absetzpunkts (112) basierend auf den Absetzpunktortsdaten (128);
Bestimmen, durch den Prozessor (702), von Koordinaten des Absetzpunkts (112), die durch die Absetzpunktortsdaten (128) angegeben werden; und
Bestimmen, durch den Prozessor (702), eines Paares der Strukturen (114), die Sätzen der ersten Koordinaten, die den Koordinaten des Absetzpunkts (112) am nächsten sind, zugehörig sind.

5. Verfahren nach Anspruch 4, wobei das Paar von Strukturen (114) eine erste Struktur (114-1) und eine zweite Struktur (114-2) einschließt, und das Bestimmen der Mittelpunkte (304) und der Routensegmente (106) umfasst:
Identifizieren, durch den Prozessor (702), von ersten Eckpunkten (302) der ersten Struktur (114-1), die den Koordinaten des Absetzpunkts (112) am nächsten sind, basierend auf den ersten Koordinaten in den Aufgabenplanungsdaten (124), die der ersten Struktur (114-1) zugehörig sind;
Identifizieren, durch den Prozessor (702), von zweiten Eckpunkten (302) der zweiten Struktur (114-2), die den Koordinaten des Absetzpunkts (112) am nächsten sind, basierend auf den ersten Koordinaten in den Auftragsplanungsdaten (124), die der zweiten Struktur (114-2) zugehörig sind;
Bestimmen, durch den Prozessor (702), von ersten Mittelpunkten (304) zwischen den ersten Eckpunkten (302) und den zweiten Eckpunkten (302) an gegenüberliegenden Enden der ersten Struktur (114-1) und der zweiten Struktur (114-2);
Erzeugen, durch den Prozessor (702), eines Routensegments (106), das sich zwischen den ersten Mittelpunkten (304) und zwischen der ersten Struktur (114-1) und der zweiten Struktur (114-2) erstreckt; und
Erstrecken, durch den Prozessor (702), des Routensegments (106) um die Erstreckungsdistanz (136) an gegenüberliegenden Enden des Routensegments (106).

6. Verfahren nach Anspruch 5, wobei das Erstrecken des Routensegments (106) das Bestimmen eines Peilwinkels des Routensegments (106) und das Erstrecken des Routensegments (106) entlang einer Linie, die basierend auf dem Peilwinkel ausgerichtet ist, umfasst.

7. Verfahren nach Anspruch 1, ferner umfassend:
Bestimmen, durch den Prozessor (702), und basierend auf den Aufgabenplanungsdaten (124) oder anderen Eingabedaten, von vierten Koordinaten eines nicht befahrbaren Bereichs (130) an der Arbeitsstätte (110);
Identifizieren, durch den Prozessor (702), eines Routensegments (106) der Routensegmente (106), das den nicht befahrbaren Bereich (130) schneidet;
Unterteilen, durch den Prozessor (702), des Routensegments (106) in zwei Routensegmente (106), die von den vierten Koordinaten des nicht befahrbaren Bereichs (130) um mindestens eine Schwellenwertdistanz beabstandet sind; und
Anpassen, durch den Prozessor (702), des Routengraphen (104) basierend auf dem Unterteilen des Routensegments (106) in die zwei Routensegmente (106).

8. Verfahren nach Anspruch 1, wobei die Aufgabenplanungsdaten (124) eine Bauplanungsdatei sind, die von den Absetzpunktortsdaten (128) getrennt ist.

9. Nichtflüchtiges computerlesbares Medium, das computerausführbare Anweisungen speichert, die, wenn sie von einem Prozessor (702) ausgeführt werden, den Prozessor (702) veranlassen:
Auftragsplanungsdaten (124), die erste Koordinaten von Strukturen (114) an einer Arbeitsstätte (110) angeben, und Absetzpunktortsdaten (128), die zweite Koordinaten von Absetzpunkten (112) an der Arbeitsstätte (110) angeben, zu empfangen;
für einzelne Absetzpunkte (112) der Absetzpunkte (112):
Koordinaten der einzelnen Absetzpunkte (112) zu bestimmen, die durch die Absetzpunktortsdaten (128) angegeben sind;
Paare der Strukturen (114) zu bestimmen, die entsprechenden Sätzen der ersten Koordinaten zugehörig sind, die den Koordinaten der einzelnen Absetzpunkte (112) am nächsten sind;
Punkte an Enden der Paare der Strukturen (114), basierend auf den ersten Koordinaten in den Aufgabenplanungsdaten (124) zu identifizieren; wobei das Medium **dadurch gekennzeichnet ist, dass** es computerausführbare Anweisungen speichert, die, wenn sie von dem Prozessor (702) ausgeführt werden, den Prozessor (702) veranlassen:
Mittelpunkte (304) zwischen den Punkten an den Enden der Paare der Strukturen (114) zu bestimmen; und
Routensegmente (106) zu bestimmen, die sich zwischen den Paaren der Strukturen (114) durch die Mittelpunkte (304) zu erstreckten Endpunkten (402) erstrecken, die in einer Erstreckungsdistanz (128) von den Enden der Paare der Strukturen (114) entfernt angeordnet sind;
zusätzliche Routensegmente (106) zu bestimmen, die sich zwischen den erstreckten Endpunkten (402) der Routensegmente (106) erstrecken; und
einen Routengraphen (104) zu erzeugen, der die Routensegmente (106) und die zusätzlichen Routensegmente (106) definiert, wobei der Routengraph (104) angibt, dass die Routensegmente (106) und die zusätzlichen Routensegmente (106) Pfade sind, die von Maschinen (108) an der Arbeitsstätte (110) passierbar sind.

10. Nicht-transitorisches computerlesbares Medium nach Anspruch 9, wobei die computerausführbaren Anweisungen ferner den Prozessor (702) veranlassen:
basierend auf den Aufgabenplanungsdaten (124) oder anderen Eingabedaten, Koordinaten eines nicht befahrbaren Bereichs (130) an der Arbeitsstätte (110) zu bestimmen;
ein Routensegment (106) der Routensegmente (106) zu identifizieren, das den nicht befahrbaren Bereich (130) schneidet;
das Routensegment (106) in zwei Routensegmente (106) zu unterteilen, die von den Koordinaten des nicht befahrbaren Bereichs (130) um mindestens eine Schwellenwertdistanz beabstandet sind; und
basierend auf dem Unterteilen des Routensegments (106) in die zwei Routensegmente (106) das Routendiagramm (104) anzupassen.

## Revendications

1. Procédé comprenant :
la réception, par un processeur (702) :
des données de conception de tâche (124) indiquant des premières coordonnées de structures (114) sur un site d'exploitation (110) ; et
des données d'emplacement de point de dépôt (128) indiquant des secondes coordonnées de points de dépôt (112) au niveau du site d'exploitation (110) ;
l'identification, par le processeur (702), sur la base des données de conception de tâche (124) et des données d'emplacement de point de dépôt (128), de points de dépôt (112) situés entre des paires de structures (114) ; **caractérisé par :**
la détermination, par le processeur (702), de points médians (304) entre les extrémités des paires de structures (114) ;
la détermination, par le processeur (702), de segments d'itinéraire (106) qui s'étendent entre les paires de structures (114) à travers les points médians (304) jusqu'aux points d'extrémité étendus (402) situés à une distance d'extension (136) des extrémités des paires de structures (114) ;
la détermination, par le processeur (702), de segments d'itinéraire (106) supplémentaires qui s'étendent entre les points d'extrémité étendus (402) des segments d'itinéraire (106) ; et
la génération, par le processeur (702), d'un graphe d'itinéraire (104) comprenant :
des nœuds indiquant des troisièmes coordonnées de points sur les segments d'itinéraire (106) et les segments d'itinéraire supplémentaires (106), et
des bords indiquant des chemins, entre des paires des troisièmes coordonnées, qui peuvent être traversés par des machines (108) sur le site d'exploitation (110).

2. Procédé selon la revendication 1, dans lequel le site d'exploitation est un site d'exploitation de construction de parc solaire, les structures (114) sont des ensembles d'installation de panneaux solaires, et les points de dépôt (112) sont des emplacements où les machines (108) doivent délivrer des panneaux solaires qui doivent être installés sur les ensembles d'installation.

3. Procédé selon la revendication 1, dans lequel les machines (108) sont des machines autonomes configurées pour se déplacer le long de segments d'itinéraire sélectionnés (106) sur la base de nœuds et d'arêtes correspondants dans le graphe d'itinéraire (104).

4. Procédé selon la revendication 1, dans lequel l'identification des points de dépôt (112) situés entre les paires de structures (114) comprend :
la sélection, par le processeur (702), d'un point de dépôt (112) sur la base des données d'emplacement de point de dépôt (128) ;
la détermination, par le processeur (702), de coordonnées du point de dépôt (112) indiquées par les données d'emplacement de point de dépôt (128) ; et
la détermination, par le processeur (702), d'une paire de structures (114) qui sont associées à des ensembles des premières coordonnées qui sont les plus proches des coordonnées du point de dépôt (112).

5. Procédé selon la revendication 4, dans lequel la paire de structures (114) comporte une première structure (114-1) et une seconde structure (114-2), et la détermination des points médians (304) et des segments d'itinéraire (106) comprend :
l'identification, par le processeur (702), de premiers points d'angle (302) de la première structure (114-1) qui sont les plus proches des coordonnées du point de dépôt (112), sur la base des premières coordonnées dans les données de conception de tâche (124) associées à la première structure (114-1) ;
l'identification, par le processeur (702), de seconds points d'angle (302) de la seconde structure (114-2) qui sont les plus proches des coordonnées du point de dépôt (112), sur la base des premières coordonnées dans les données de conception de tâche (124) associées à la seconde structure (114-2) ;
la détermination, par le processeur (702), de premiers points médians (304) entre les premiers points d'angle (302) et les seconds points d'angle (302) au niveau d'extrémités opposées de la première structure (114-1) et de la seconde structure (114-2) ;
la génération, par le processeur (702), d'un segment d'itinéraire (106) qui s'étend entre les premiers points médians (304) et entre la première structure (114-1) et la seconde structure (114-2) ; et
l'extension, par le processeur (702), du segment d'itinéraire (106) de la distance d'extension (136) au niveau d'extrémités opposées du segment d'itinéraire (106).

6. Procédé selon la revendication 5, dans lequel l'extension du segment d'itinéraire (106) comprend la détermination d'un angle d'appui du segment d'itinéraire (106), et l'extension du segment d'itinéraire (106) le long d'une ligne orientée sur la base de l'angle d'appui.

7. Procédé selon la revendication 1, comprenant en outre :
la détermination, par le processeur (702), et sur la base des données de conception de tâche (124) ou d'autres données d'entrée, de quatrièmes coordonnées d'une zone non carrossable (130) sur le site d'exploitation (110) ;
l'identification, par le processeur (702), d'un segment d'itinéraire (106), parmi les segments d'itinéraire (106), qui coupe la zone non carrossable (130) ;
la division, par le processeur (702), du segment d'itinéraire (106) en deux segments d'itinéraire (106) espacés des quatrièmes coordonnées de la zone non carrossable (130) d'au moins une distance seuil ; et
l'ajustement, par le processeur (702), du graphe d'itinéraire (104) sur la base de la division du segment d'itinéraire (106) en deux segments d'itinéraire (106).

8. Procédé selon la revendication 1, dans lequel les données de conception de tâche (124) sont un fichier de conception de construction qui est distinct des données d'emplacement de point de dépôt (128).

9. Support non transitoire lisible par ordinateur stockant des instructions exécutables par ordinateur qui, lorsqu'elles sont exécutées par un processeur (702), amènent le processeur (702) à :
recevoir des données de conception de tâche (124) indiquant les premières coordonnées des structures (114) sur un site d'exploitation (110), et des données d'emplacement de point de dépôt (128) indiquant les secondes coordonnées des points de dépôt (112) sur le site d'exploitation (110) ;
pour des points de dépôt individuels (112), parmi les points de dépôt (112) :
déterminer les coordonnées des points de dépôt individuels (112), indiquées par les données d'emplacement de point de dépôt (128) ;
déterminer des paires de structures (114) qui sont associées à des ensembles correspondants des premières coordonnées qui sont les plus proches des coordonnées des points de dépôt individuels (112) ;
identifier des points au niveau des extrémités des paires de structures (114), sur la base des premières coordonnées dans les données de conception de tâche (124) ; le support étant **caractérisé en ce qu'il** stocke des instructions exécutables par ordinateur qui, lorsqu'elles sont exécutées par le processeur (702), amènent le processeur (702) à :
déterminer des points médians (304) entre les points au niveau des extrémités des paires des structures (114) ; et
déterminer des segments d'itinéraire (106) qui s'étendent entre les paires de structures (114), à travers les points médians (304), jusqu'à des points d'extrémité étendus (402) situés à une distance d'extension (128) des extrémités des paires de structures (114) ;
déterminer des segments d'itinéraire (106) supplémentaires qui s'étendent entre les points d'extrémité étendus (402) des segments d'itinéraire (106) ; et
générer un graphe d'itinéraire (104) qui définit les segments d'itinéraire (106) et les segments d'itinéraire supplémentaires (106), dans lequel le graphique d'itinéraire (104) indique que les segments d'itinéraire (106) et les segments d'itinéraire supplémentaires (106) sont des chemins qui peuvent être parcourus par des machines (108) sur le site d'exploitation (110).

10. Support non transitoire lisible par ordinateur selon la revendication 9, dans lequel les instructions exécutables par ordinateur amènent en outre le processeur (702) à :
déterminer, sur la base des données de conception de tâche (124) ou d'autres données d'entrée, des coordonnées d'une zone non carrossable (130) sur le site d'exploitation (110) ;
identifier un segment d'itinéraire (106), parmi les segments d'itinéraire (106), qui croise la zone non carrossable (130) ;
diviser le segment d'itinéraire (106) en deux segments d'itinéraire (106) espacés des coordonnées de la zone non carrossable (130) d'au moins une distance seuil ; et
ajuster le graphe d'itinéraire (104) sur la base de la division du segment d'itinéraire (106) en deux segments d'itinéraire (106).
